# EUROPÄISCHE PATENTSCHRIFT

(11) **EP 2 282 939 B1**
(45) Veröffentlichungstag und Bekanntmachung des Hinweises auf die Patenterteilung: **07.12.2011**
(21) Anmeldenummer: 09753514.0
(22) Anmeldetag: 23.04.2009
(51) Int. Cl.: B64F 1/06

(54) **KATAPULT ZUM ABSCHIESSEN EINES FLUGGERÄTS**
CATAPULT FOR LAUNCHING AN AIRCRAFT
CATAPULTE DE LANCEMENT D'UN AÉRONEF

(30) Priorität: 26.05.2008 DE 102008025101
(43) Veröffentlichungstag der Anmeldung: 16.02.2011
(73) Patentinhaber: Gabler Maschinenbau GmbH, 23568 Lübeck (DE)
(72) Erfinder: TENBERGEN, Martin, 45046 Oberhausen (DE); KRÜGER, Bernhard, 23611 Bad Schwartau (DE)
(74) Vertreter: Vollmann, Heiko
(86) Internationale Anmeldenummer: PCT/DE2009/000568
(87) Internationale Veröffentlichungsnummer: WO 2009/143798

(56) Entgegenhaltungen:
- DE-A1- 2 551 651
- DE-C1- 19 608 624
- US-A- 2 827 248
- US-A- 5 421 783

## Beschreibung

Die Erfindung betrifft ein Katapult zum Abschießen eines Fluggeräts mit den im Oberbegriff des Anspruchs 1 angegebenen Merkmalen.

Militärische Wasserfahrzeuge, d.h. Überwasserschiffe und Unterseeboote können die Fähigkeit besitzen, Fluggeräte von Bord zu starten. Bei diesen Fluggeräten kann es sich um so genannte UAVs (Unmanned Aerial Vehicles) wie z. B. Drohnen, raketen-, motorangetriebene und nicht angetriebene Flugkörper handeln. Zum Starten der Fluggeräte stehen üblicherweise Katapultvorrichtungen zur Verfügung, mit denen diese Fluggeräte abgeschossen, d.h. gestartet werden können.

Bei einer bekannten Katapultvorrichtung wird das Fluggerät mittels eines gespannten Gummiseils von einer Führungsschiene, auf der das Fluggerät beweglich geführt ist, unter Entspannung des Gummiseils abgeschossen. Das vorgespannte Gummiseil ist in direkter Verlängerung der Führungsschiene in Abschussrichtung vor dieser angeordnet oder ohne Übersetzung entgegen der Abschussvorrichtung umgelenkt. Dies führt zumindest in Abschussrichtung des Fluggeräts zu vergleichsweise großen Abmessungen dieser Katapultvorrichtung, was sie in der Regel für einen mobilen Einsatz und für einen Einsatz unter beengten Raumverhältnissen, wie z.B. in einem Unterseeboot, ungeeignet macht. Ein weiterer Nachteil dieser bekannten Katapultvorrichtung besteht darin, dass der Abschussvorgang des Fluggeräts nicht automatisiert ablaufen kann.

Aus US 2,827,248 ist ein Katapult zum Abschießen eines Fluggeräts bekannt, bei dem ein Schlitten zur Lagerung des Fluggeräts mit einem umlaufenden geschlossenen Seilzug gekoppelt ist, der über zwei Seilrollen gespannt ist. Ein Lager einer in Abschussrichtung vorderen Seilrolle ist mit dem Kolben einer Kolben-Zylinder-Anordnung bewegungsgekoppelt. Der Zylinder der Kolben-Zylinder-Anordnung ist mit einem Druckspeicher fluidverbunden. Hierdurch ist die vordere Seilrolle mit dem Seilzug vorspannbar. Der Seilzug ist durch eine zweite Kolben-Zylinder-Anordnung geführt, deren Kolben an dem Seilzug befestigt ist. Diese zweiten Kolben-Zylinder-Anordnung ist durch Öffnen eines Ventils ebenfalls mit der Druckquelle fluidverbindbar, wodurch der Kolben der zweiten Kolben-Zylinder-Anordnung und damit der Schlitten zur Lagerung des Fluggeräts zum Abschießen des Fluggeräts unter gleichzeitiger Druckentlastung der ersten Kolben-Zylinder-Anordnung beschleunigt bewegt werden.

Vor diesem Hintergrund liegt der Erfindung die Aufgabe zugrunde, ein Katapult zu schaffen, mit dem Fluggeräte abgeschossen werden können, wobei das Katapult gegenüber den bislang bekannten Vorrichtungen dieser Art deutlich kleinere Abmessungen aufweisen soll und wobei der Spann- und Abschussvorgang in einer Weiterbildung der Erfindung automatisierbar sein soll.

Gelöst wird diese Aufgabe durch ein Katapult zum Abschießen eines Fluggeräts mit den in Anspruch 1 angegebenen Merkmalen. Vorteilhafte Weiterbildungen der Erfindung ergeben sich aus den Unteransprüchen, der nachfolgenden Beschreibung sowie der Zeichnung.

Das erfindungsgemäße Katapult zum Abschießen eines Fluggeräts weist einen auf einer Führungsschiene bewegbaren Schlitten zur Lagerung des Fluggeräts auf. Darüber hinaus weist das Katapult zumindest ein gespanntes Seil mit zumindest einem elastischen Abschnitt auf, mit welchem der Schlitten unter zumindest teilweiser Entspannung des Seils von einer Startposition in eine Abschussposition bewegbar ist. Zu diesem Zweck ist ein Ende des Seils, dessen elastischer Abschnitt vorzugsweise aus Gummi oder einem Elastomer besteht, an dem Schlitten befestigt, während das andere Ende des Seils an einem feststehenden oder festlegbaren Teil des Katapults befestigt sein kann. Durch Spannen des Seils kann der Schlitten unter Speicherung potentieller Energie in dem elastischen Seilabschnitt auf der Führungsschiene in seine vorzugsweise durch einen Anschlag festgelegte Startposition bewegt werden und anschließend unter Umwandlung der in dem elastischen Seilabschnitt gespeicherten Energie in kinetische Energie in Richtung der vorzugsweise ebenfalls durch einen Anschlag festgelegten Abschussposition beschleunigt werden, wo das Fluggerät dann den Schlitten verlässt.

Das Seil ist über zumindest eine Umlenkrolle vorzugsweise parallel zu der Führungsschiene geführt. Es ist also an dem abschussseitigen Ende der Führungsschiene eine Umlenkrolle derart angeordnet, dass sie den an einem feststehenden oder festlegbaren Teil des Katapults befestigten Endabschnitt des Seils in eine Anordnung neben oder unterhalb der Führungsschiene und vorzugsweise parallel zu dieser umlenkt. Dementsprechend wird die Abmessung des erfindungsgemäßen Katapults in Abschussrichtung des Fluggeräts im Wesentlichen nur von der Länge der Führungsschiene bestimmt, d.h., das erfindungsgemäße Katapult weist eine deutlich geringere Baugröße als die bislang bekannten Katapulte zum Abschießen eines Fluggeräts auf. Dies macht das erfindungsgemäße Katapult in vorteilhafter Weise zum mobilen Einsatz oder zum Einsatz unter beengten räumlichen Verhältnissen, beispielsweise in einem Unterseeboot, geeignet. Dabei bildet das Seil einen Teil eines umlaufenden geschlossenen Seilzugs mit einem elastischen und einem nicht elastischen Seilabschnitt. Hierdurch lassen sich vorteilhaft besonders große Seillängen und Spannwege realisieren, wobei die Abmessungen des Katapults in Abschussrichtung im Wesentlichen von der Länge der Führungsschiene bestimmt werden.

Zweckmäßigerweise ist bei dem erfindungsgemäßen Katapult neben der zumindest einen Umlenkrolle an dem abschussseitigen Ende der Führungsschiene im Bereich des hiervon abgewandten Endes der Führungsschiene zumindest eine weitere Umlenkrolle vorgesehen, um die der Seilzug ebenfalls geführt ist. Vorteilhaft sind sowohl der elastische Abschnitt des Seilzugs als auch der nicht elastische Abschnitt des Seilzugs an dem Schlitten zur Lagerung des Fluggeräts befestigt, wobei bevorzugt der elastische Abschnitt an dem der Abschussposition zugewandten Ende des Schlittens und der nicht elastische Abschnitt an dem hiervon abgewandten Ende des Schlittens befestigt ist. Derart ausgestaltet kann der Schlitten mittels des nicht elastischen Abschnitts auf der Führungsschiene in die Startposition gezogen werden. Danach kann der elastische Abschnitt gespannt werden, wobei der Schlitten in der Startposition typischerweise mittels geeigneter Verriegelungsmittel festgelegt wird. Durch Lösen der Verriegelung entspannt sich dieser Abschnitt des Seilzugs und der Schlitten wird von der Startposition in die Abschussposition bewegt, in der das Fluggerät das Katapult verlässt.

Besonders vorteilhaft ist der nicht elastische Abschnitt des Seilzugs mit einem Antrieb bewegungsgekoppelt. Dementsprechend kann an dem nicht elastischen Abschnitt des Seilzugs direkt oder indirekt ein Antrieb angreifen, mit dem der Seilzug sowohl in Abschussrichtung des Fluggeräts als auch entgegen dieser Abschussrichtung bewegt werden kann. Dies ist insofern vorteilhaft, als dies die Automatisierung des Abschussvorgangs ermöglicht. So kann der Seilzug von dem Antrieb, bei dem es sich vorzugsweise um einen Linearantrieb handelt, in eine erste Richtung bewegt werden, wodurch der Schlitten zur Lagerung des Fluggeräts auf der Führungsschiene in die Startposition bewegt wird. Anschließend bewegt der gleiche Antrieb den Seilzug nach einer Festlegung des Schlittens in der Startposition in umgekehrter Richtung und spannt damit einhergehend den elastischen Abschnitt des Seilzugs. Zweckmäßigerweise werden der Antrieb sowie die Verriegelungsmittel, mit denen der Schlitten in der Startposition festgelegt wird, von einer gemeinsamen Steuerung angesteuert.

Bevorzugt greift der Antrieb nicht direkt an dem nicht elastischen Abschnitt des Seilzugs an. Stattdessen ist vorteilhafterweise ein mit dem nicht elastischen Seilabschnitt bewegungsgekoppelter Spannschlitten vorgesehen, der von dem Antrieb bewegbar ist. Dieser Spannschlitten kann vorteilhaft an der Führungsschiene zur Führung des Schlittens zur Lagerung des Fluggeräts beweglich geführt sein, wobei er typischerweise an der Seite der Führungsschiene angeordnet ist, die von dem Schlitten zur Lagerung des Fluggeräts abgewandt ist. Zweckmäßigerweise sind an dem Spannschlitten sowohl der elastische als auch der nicht elastische Abschnitt des Seilzugs befestigt, wobei diese beiden Seilabschnitte bevorzugt an in Bewegungsrichtung des Spannschlittens voneinander abgewandten Enden des Spannschlittens befestigt sind.

Um die mit dem Spannen des elastischen Seilabschnitts einhergehende Verlängerung des Seilzugs ausgleichen zu können, ist es bevorzugt vorgesehen, den Seilzug von einer beweglich gelagerten, mittels eines elastischen Spannseils vorgespannten Spannrolle zu spannen. Durch die vorzugsweise mit einem elastischen Seil vorgespannte Spannrolle wird der Seilzug immer mit einer Zugkraft beaufschlagt.

Hierbei ist das Spannseil bevorzugt in entgegengesetzter Richtung zur Spannrichtung des zur Lagerung des Fluggeräts vorgesehen Schlittens vorgespannt, sodass der Seilzug mittels der Spannrolle in einem Bereich neben oder unterhalb der Führungsschiene umgelenkt werden kann, wodurch die Abmessungen des Katapults in Abschussrichtung des Fluggeräts nicht verändert werden und im Wesentlichen allein von der Länge der Führungsschiene bestimmt werden.

Die von dem Spannseil auf die Spannrolle ausgeübte Spannkraft ist der Spannkraft des elastischen Abschnitts des Seilzugs entgegengerichtet. Dementsprechend ergibt sich die den Schlitten zur Lagerung des Fluggeräts bei der Bewegung von der Startposition zu der Abschussposition bewegende Antriebskraft aus der Differenz der auf den elastischen Abschnitt des Seilzugs ausgeübten Spannkraft und der von dem Spannseil auf die Spannrolle ausgeübten Spannkraft. Die den elastischen Abschnitt des Seilzugs spannende Spannkraft ist deutlich größer als die von dem Spannseil auf die Spannrolle ausgeübte Spannkraft. Um den Einfluss letztgenannter Spannkraft auf die auf den Schlitten zur Lagerung des Fluggeräts wirkende Antriebskraft und damit einhergehend auf die Beschleunigung des Schlittens zu verringern, ist bevorzugt vorgesehen, den Seilzug als einen ein- oder mehrgängigen Flaschenzug auszubilden, wobei die Spannrolle eine beweglich gelagerte Umlenkrolle des Flaschenzugs bildet. Auf diese Weise kann die der auf den elastischen Seilabschnitt ausgeübten Spannkraft entgegengerichtete Kraft zumindest halbiert werden. Ist der elastische Seilabschnitt so umgelenkt, dass er sich in der Abschussposition gegenüber der Startposition lediglich um etwa ein Drittel der Gesamtspannkraft entspannt, kann auf diese Weise vorteilhaft bis zum Erreichen der Abschussposition eine im Wesentlichen gleichmäßige Beschleunigung des Schlittens zur Lagerung des Fluggeräts erzielt werden.

Die Spannrolle ist vorzugsweise in einer linearen Führungsbahn beweglich geführt. Anschläge in der Führungsbahn können hierbei den Bewegungsweg der Spannrolle derart begrenzen, dass die Spannrolle den Seilzug in jeder Phase des Abschussvorgangs bzw. in beiden von den Anschlägen gebildeten Endlagen in der Führungsbahn mit einer Zugkraft beaufschlagt.

Um sicherzustellen, dass der Schlitten zur Lagerung des Fluggeräts bei seiner Abschussbewegung von der Startposition zu der Abschussposition bei Erreichen der Abschussposition eine ausreichend hohe Geschwindigkeit aufweist, ist der elastische Seilabschnitt zweckmäßigerweise auch in Abschussposition stets vorgespannt.

Aufgrund seiner vergleichsweise kompakten Baugröße kann das erfindungsgemäße Katapult vorteilhaft Teil eines Ausfahrgerätes eines Unterseeboots bilden. D.h., das Katapult kann auf einer solchen Einrichtung eines Unterseeboots angeordnet sein, die aus dessen Bootskörper ausgefahren werden kann, um aus einer Position außerhalb des Bootskörpers das Fluggerät abzuschießen, wobei die Ausfahreinrichtung anschließend wieder in den Bootskörper zurückgefahren werden kann.

Nachfolgend ist die Erfindung anhand von in der Zeichnung dargestellten Ausführungsbeispielen näher erläutert. In der Zeichnung zeigt:
- Fig. 1: in stark vereinfachter schematischer Darstellung eine erste Ausgestaltung des erfindungsgemäßen Katapults,
- Fig. 2: in stark vereinfachter schematischer Darstellung eine zweite Ausgestaltung des erfindungsgemäßen Katapults in einer ersten Abschussphase,
- Fig. 3: in stark vereinfachter schematischer Darstellung das Katapult nach Fig. 2 in einer zweiten Abschussphase und
- Fig. 4: in stark vereinfachter schematischer Darstellung das Katapult nach Fig. 2 in einer dritten Abschussphase.

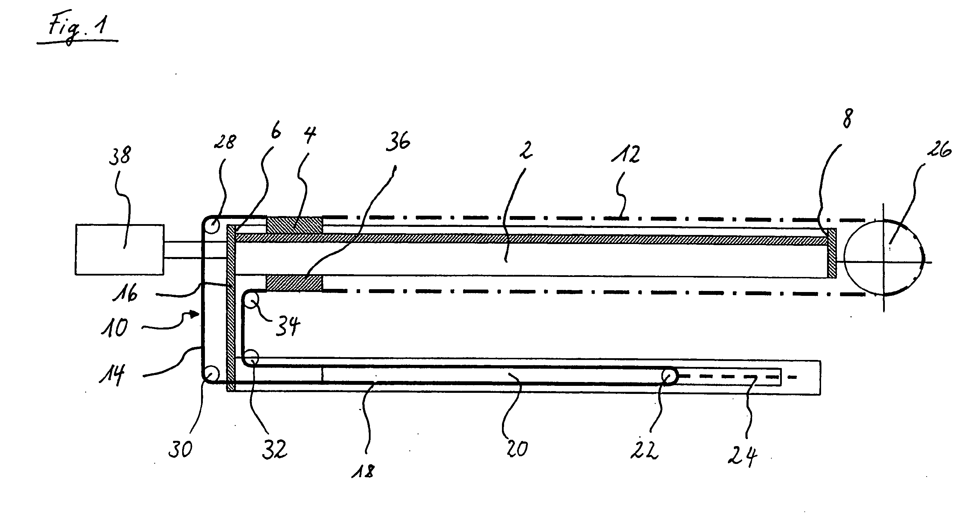

Das in Fig. 1 dargestellte Katapult weist eine Führungsschiene 2 auf, auf deren Oberseite ein Schlitten 4 zur Lagerung eines nicht dargestellten Fluggeräts zwischen einer Startposition 6 und einer Abschussposition 8 linear beweglich geführt ist. Sowohl an dem der Startposition 6 zugewandten Ende als auch an dem der Abschussposition 8 zugewandten Ende des Schlittens 4 ist ein Ende eines umlaufend geschlossenen Seilzugs 10 befestigt.

Der Seilzug 10 weist einen elastisch ausgebildeten Abschnitt 12, der in der Zeichnung strichpunktiert dargestellt ist und einen mit einer durchgehenden Linie dargestellten nicht elastischen Abschnitt auf. Sowohl ein Ende des elastischen Abschnitts 12 als auch ein Ende des nicht elastischen Abschnitts 14 sind an dem Schlitten 4 befestigt, wobei der elastische Abschnitt 12 an dem der Abschussposition 8 zugewandten Ende des Schlittens 4 und der nicht elastische Abschnitt 14 an dem der Startposition 12 zugewandten Ende des Schlittens 4 angebracht sind. Unterhalb der Führungsschiene 2 ist über ein Verbindungsbauteil 16 beabstandet von der Führungsschiene 2 ein Bauteil 18 angeordnet, an dem eine Führungsbahn 20 ausgebildet ist. Die Führungsbahn 20 ist parallel zu der Führungsschiene 2 ausgerichtet. In der Führungsbahn 20 ist eine Spannrolle 22 linear beweglich angeordnet. Die Spannrolle 22 ist an einem gestrichelt dargestellten elastischen Seil 24 befestigt.

Der Seilzug 10 des Katapults ist über eine Umlenkrolle 26 geführt, die außenseitig der Führungsschiene 2 der Abschussposition 8 gegenüberliegend angeordnet ist. Von dort ist der Seilzug 10 oberhalb der Führungsschiene 2 zu einer Umlenkrolle 28, die im Bereich des anderen Endes der Führungsschiene 2 angeordnet ist und weiter außenseitig des Verbindungsbauteils 16 zu einer Umlenkrolle 30 geführt. Weiter ist der Seilzug 10 um die Spannrolle 22 gelegt und zurück zu dem Verbindungsbauteil 16 geführt, wo es um eine Umlenkrolle 32 gelegt ist und weiter zu einer im Bereich der Unterseite der Führungsschiene 2 angeordneten Umlenkrolle 34 führt. Von der Umlenkrolle 34 ist der Seilzug 10 schließlich entlang der Unterseite der Führungsschiene 2 wieder zurück zu der Umlenkrolle 26 geführt.

Parallel zur Bewegungsrichtung des Schlittens 4 ist an der Unterseite der Führungsschiene 2 ein Spannschlitten 36 linear beweglich geführt. An dem der Umlenkrolle 26 zugewandten Ende des Spannschlittens 36 ist der elastische Abschnitt 12 des Seilzugs 10 befestigt und an dem der Umlenkrolle 36 zugewandten Ende des Spannschlittens 36 der nicht elastische Abschnitt 14 des Seilzugs 10 befestigt.

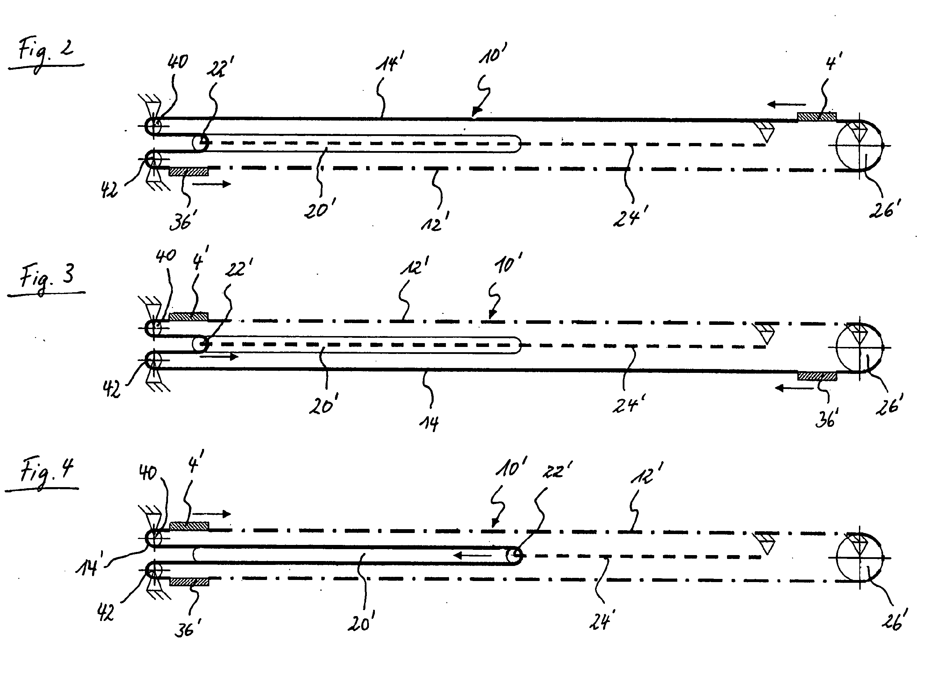

Der Spannschlitten 36 ist mit einem Antrieb 38 bewegungsgekoppelt und mittels dieses Antriebs 38 sowohl in Richtung der Umlenkrolle 26 als auch in Richtung der Umlenkrolle 34 bewegbar. Dies ermöglicht es, den Schlitten 4 mittels des Spannschlittens 36 zunächst in seine Startposition 6 zu ziehen und anschließend ebenfalls mittels des Spannschlittens 36 den elastischen Abschnitt 12 des Seilzugs 10 zu spannen, was nachfolgend ausführlicher anhand des in den Figuren 2 bis 4 dargestellten Ausführungsbeispiels näher erläutert wird.

In den Figuren 2 bis 4 ist ein Katapult in drei aufeinanderfolgenden Abschussphasen des Fluggeräts dargestellt. Zur Verbesserung der Übersichtlichkeit sind in diesen Figuren lediglich der Verlauf des Seilzugs 10' um Umlenkrollen 26', 40 und 42 und die Spannrolle 22', die Führungsbahn 20', in der die Spannrolle 22' beweglich geführt ist, der Schlitten 4' zur Lagerung des Fluggeräts und der Spannschlitten 36' dargestellt.

Wie bei dem in Fig. 1 dargestellten Katapult ist auch bei dem in den Figuren 2 bis 4 dargestellten Katapult in Abschussrichtung des Fluggeräts außenseitig der nicht dargestellten Führungsschiene eine Umlenkrolle 26' angeordnet, um die der Seilzug 10' gelegt ist. Dieser Seilzug 10' ist darüber hinaus um zwei Umlenkrollen 40 und 42 geführt, die im Bereich des von der Umlenkrolle 26' abgewandten Endes der Führungsschiene vorgesehen sind. Die Umlenkrolle 40 und 42 sind derart angeordnet, dass die beiden von der Umlenkrolle 26' ausgehenden Trums des Seilzugs 10' bevorzugt parallel zueinander ausgerichtet sind. Zwischen den Umlenkrollen 40 und 42 greift die an einem elastischen Seil 24' befestigte Spannrolle 22' so an dem Seilzug 10' an, dass dieser um die Spannrolle 22' eine mäanderförmige Schlaufe bildet.

Die Funktionsweise des erfindungsgemäßen Katapults ist wie folgt:

Mittels eines nicht dargestellten Antriebs wird der Spannschlitten 36', der sich zunächst in der Nähe der Umlenkrolle 42 befindet (Fig. 2) in Richtung der Umlenkrolle 26' bewegt. Der Spannschlitten 36' ist über den nicht elastischen Abschnitt 14' des Seilzugs 10' mit dem Schlitten 4' verbunden, auf dem das Fluggerät gelagert ist. Auf diese Weise wird der Schlitten 4' durch die Bewegung des Spannschlittens 36' in Richtung der Umlenkrolle 40 gezogen, bis er dort eine Startposition erreicht, in der er mit Befestigungsmitteln festgelegt wird. Die Spannrolle 22' befindet sich bei maximal gespanntem Seil 24' an einem den Umlenkrollen 40 und 42 zugewandten Ende der Führungsbahnen 20' in einer Endlage.

Anschließend wird der Spannschlitten 36' bei festgelegtem Schlitten 4' von dem Antrieb wieder zurück in Richtung der Umlenkrolle 42 bewegt (Fig. 3). Hierdurch wird der elastische Abschnitt 12' des Seilzugs 10', der den Schlitten 4' ebenfalls mit dem Spannschlitten 36' verbindet, gespannt. Dies hat eine Vergrößerung der Länge des Seilzugs 10' zur Folge. Diese Längenänderung wird von der Spannrolle 22 ausgeglichen, die von dem Seil 24' in der Führungsbahn 20' in Richtung einer der Umlenkrolle 26' zugewandten Endlage zieht, wodurch der nicht elastische Abschnitt 14' des Seilzugs 10', an dem die Spannrolle 22' angreift, trotz der Verlängerung des Seilzugs 10' auf Spannung gehalten wird.

Dieser Zustand ist in Figur 4 dargestellt. Der Schlitten 4' befindet sich hier in der Startposition. Durch Lösen der Verriegelung, die den Schlitten 4' in dieser Startposition festhält, wird der Schlitten 4' unter Entspannung des elastischen Abschnitts 12' des Seilzugs 10' in Richtung Umlenkrolle 26' beschleunigt, wo das Fluggerät in einer in der Nähe der Umlenkrolle 26' vorgesehenen Abschussposition den Schlitten 4' verlässt.

### Bezugszeichenliste

- 2 -: Führungsschiene
- 4, 4' -: Schlitten
- 6 -: Startposition
- 8 -: Abschussposition
- 10, 10' -: Seilzug
- 12, 12' -: Abschnitt
- 14, 14' -: Abschnitt
- 16 -: Verbindungsbauteil
- 18 -: Bauteil
- 20, 20'-: Führungsbahn
- 22, 22'-: Spannrolle
- 24, 24' -: Seil
- 26, 26'-: Umlenkrolle
- 28 -: Umlenkrolle
- 30 -: Umlenkrolle
- 32 -: Umlenkrolle
- 34 -: Umlenkrolle
- 36, 36'-: Spannschlitten
- 38 -: Antrieb
- 40 -: Umlenkrolle
- 42 -: Umlenkrolle

## Patentansprüche

1. Katapult zum Abschießen eines Fluggeräts mit einem auf einer Führungsschiene (2) bewegbaren Schlitten (4) zur Lagerung des Fluggeräts und mit zumindest einem spannbaren Seil, welches zumindest abschnittsweise elastisch ausgebildet ist und mit welchem der Schlitten (4) unter Entspannung des Seils von einer Startposition (6) in eine Abschussposition (8) bewegbar ist, wobei das Seil über zumindest eine Umlenkrolle (26) geführt ist und einen Teil eines umlaufenden geschlossenen Seilzugs (10) bildet, **dadurch gekennzeichnet, dass** das Seil einen elastischen (12) und einen nicht elastischen (14) Seilabschnitt aufweist.

2. Katapult nach Anspruch 1, **dadurch gekennzeichnet, dass** das Seil neben der unterhalb der Führungsschiene (2) und vorzugsweise parallel zu der Führungsschiene (2) geführt ist.

3. Katapult nach einem der Ansprüche 1 oder 2, **dadurch gekennzeichnet, dass** der nichtelastische Abschnitt (14) des Seilzugs (10) mit einem Antrieb (38) bewegungsgekoppelt ist.

4. Katapult nach einem der Ansprüche 2 oder 3, **dadurch gekennzeichnet, dass** ein mit dem nicht elastischen Seilabschnitt (14) bewegungsgekoppelter Spannschlitten (36) vorgesehen ist, welcher von dem Antrieb (38) bewegbar ist.

5. Katapult nach einem der Ansprüche 2 bis 4, **dadurch gekennzeichnet, dass** der Seilzug (10) von einer beweglich gelagerten, mittels eines elastischen Spannseils (24) vorgespannten Spannrolle (22) gespannt wird.

6. Katapult nach Anspruch 5, **dadurch gekennzeichnet, dass** das Spannseil (24) in entgegen gesetzter Richtung zur Spannrichtung des Schlittens (4) vorgespannt ist.

7. Katapult nach einem der Ansprüche 5 oder 6, **dadurch gekennzeichnet, dass** der Seilzug (10) als ein- oder mehrgängiger Flaschenzug ausgebildet ist, wobei die Spannrolle (22) eine beweglich gelagerte Umlenkrolle des Flaschenzugs bildet.

8. Katapult nach einem der Ansprüche 5 bis 7, **dadurch gekennzeichnet, dass** die Spannrolle (22) in einer Führungsbahn (20) und vorzugsweise in einer linearen Führungsbahn beweglich geführt ist.

9. Katapult nach einem der vorangehenden Ansprüche, **dadurch gekennzeichnet, dass** der elastische Seilabschnitt (12) vorgespannt ist.

10. Katapult nach einem der vorangehenden Ansprüche, **dadurch gekennzeichnet, dass** das Katapult Teil einer Ausfahreinrichtung eines Unterseeboots bildet.

## Claims

1. A catapult for firing a flight object, with a carriage (4) which is movable on a guide rail (2), for mounting the flight object and with at least one tensionable cable which at least in sections is designed in an elastic manner and with which the carriage (4) amid relaxation of the cable may be moved from a start position (6) into a firing position (8), wherein the cable is led over at least one deflection roller (26) and forms a part of a revolving closed pull cable (10), **characterised in that** the cable has an elastic (12) and a non-elastic (14) cable section.

2. A catapult according to claim 1, **characterised in that** the cable is led next to or below the guide rail (2) and preferably parallel to the guide rail (2).

3. A catapult according to one of the claims 1 or 2, **characterised in that** the non-elastic section (14) of the pull cable (10) is coupled in movement to a drive (38).

4. A catapult according to one of the claims 2 or 3, **characterised in that** a tensioning carriage (36) is provided, which is coupled in movement to the non-elastic cable section (14) and is movable by the drive (38).

5. A catapult according to one of the claim 2 to 4, **characterised in that** the pull cable (10) is tensioned by a movably mounted tensioning roller (22) which is biased by way of an elastic tension cable (24).

6. A catapult according to claim 5, **characterised in that** the tension cable (24) is biased in the opposite direction to the tensioning direction of the carriage (4).

7. A catapult according to one of the claims 5 or 6, **characterised in that** the pull cable (10) is designed as a single-pulley system or multi-pulley system, wherein the tension roller (22) forms a movably mounted deflection roller of the pulley system.

8. A catapult according to one of the claims 5 to 7, **characterised in that** the tension roller (22) is movably guided in a guide path (20) and preferably in a linear guide path.

9. A catapult according to one of the preceding claims, **characterised in that** the elastic cable section (12) is biased.

10. A catapult according to one of the preceding claims, **characterised in that** the catapult forms part of an extension device of a submarine.

## Revendications

1. Catapulte destinée à lancer un aéronef, comprenant un chariot (4) pouvant se déplacer sur un rail de guidage (2) et destiné à porter l'aéronef, et au moins un câble pouvant être tendu, qui est exécuté au moins par segments de façon élastique et avec lequel le chariot (4) peut être déplacé d'une position de départ (6) dans une position de lancement (8) lors de la détente du câble, le câble étant guidé sur au moins une poulie de renvoi (26) et constituant une partie d'un câble de commande (10) refermé en boucle, **caractérisée en ce que** le câble comprend un segment de câble élastique (12) et un segment de câble non élastique (14).

2. Catapulte selon la revendication 1, **caractérisée en ce que** le câble est guidé à côté ou au-dessous du rail de guidage (2) et de préférence parallèlement au rail de guidage (2).

3. Catapulte selon l'une des revendications 1 ou 2, **caractérisée en ce que** le segment non élastique (14) du câble de commande (10) est accouplé cinématiquement à un entraînement (38).

4. Catapulte selon l'une des revendications 2 ou 3, **caractérisée en ce qu'**il est prévu un chariot de tension (36) accouplé cinématiquement au segment de câble non élastique (14) et qui peut être mis en mouvement par l'entraînement (38).

5. Catapulte selon l'une des revendications 2 à 4, **caractérisée en ce que** le câble de commande (10) est tendu par une poulie de tension (22) montée mobile et précontrainte au moyen d'un câble de tension élastique (24).

6. Catapulte selon la revendication 5, **caractérisée en ce que** le câble de tension (24) est précontraint dans le sens inverse du sens de tension du chariot (4).

7. Catapulte selon l'une des revendications 5 ou 6, **caractérisée en ce que** le câble de commande (10) prend la forme d'un moufle à un ou plusieurs brins, la poulie de tension (22) formant une poulie de renvoi du moufle qui est montée mobile.

8. Catapulte selon l'une des revendications 5 à 7, **caractérisée en ce que** la poulie de tension (22) est guidée mobile sur un trajet de guidage (20) et de préférence sur un trajet de guidage linéaire.

9. Catapulte selon l'une des revendications précédentes, **caractérisée en ce que** le segment de câble élastique (12) est précontraint.

10. Catapulte selon l'une des revendications précédentes, **caractérisée en ce que** la catapulte fait partie d'un dispositif de sortie d'un sous-marin.
